# EUROPÄISCHE PATENTSCHRIFT

(11) **EP 3 360 633 B1**
(45) Veröffentlichungstag und Bekanntmachung des Hinweises auf die Patenterteilung: **08.04.2020**
(21) Anmeldenummer: 17155782.0
(22) Anmeldetag: 13.02.2017
(51) Int. Cl.: B23B 31/171

(54) **VORRICHTUNG UND SPANN-GEHÄUSE**
DEVICE AND TENSIONING HOUSING
DISPOSITIF ET BOÎTIER DE SERRAGE

(43) Veröffentlichungstag der Anmeldung: 15.08.2018
(73) Patentinhaber: SMW-AUTOBLOK Spannsysteme GmbH, 88074 Meckenbeuren (DE)
(72) Erfinder: Maurer, Eckhard, 88094 Oberteuringen (DE)
(74) Vertreter: Engelhardt, Volker

(56) Entgegenhaltungen:
- EP-B1- 2 363 225
- DE-B- 1 120 839
- US-A- 1 341 085

## Beschreibung

Die Erfindung bezieht sich auf eine Vorrichtung, durch die ein zu bearbeitendes Werkstück an einem Werkzeugtisch einer Werkzeugmaschine gehalten ist, nach dem Oberbegriff des Patentanspruches 1.

Eine Vorrichtung gemäß dem Oberbegriff des Anspruchs 1 ist aus EP 2 363 225 B1 bekannt.

Durch die EP 2 363 225 B1 ist ein sogenanntes Nullpunktspannsystemen bekannt geworden, durch das ein zu bearbeitendes Werkstück im Bereich einer Werkzeugmaschine befestigt werden kann, um die Montage sowie Demontage des Werkstückes an der Werkzeugmaschine bzw. deren Werkzeugtisch vorzunehmen, ohne dass hierfür aufwändige Umrüstzeiten benötigt sind. Zu diesem Zweck weist eine solche Spann-Vorrichtung ein Gehäuse auf, in das eine Durchgangsöffnung eingearbeitet ist. Der Innenradius der Durchgangsöffnung besteht aus unterschiedlich groß bemessenen Teilabschnitten, die ausgehend von dem Werkzeugtisch nach oben größer werden, so dass die Vorrichtung mittels einer Befestigungsschraube an dem Werkzeugtisch arretierbar ist. Folglich sind die Spann-Gehäuse als Bestandteil der Vorrichtung, wenn diese entsprechend an dem Werkzeugtisch positioniert sind, nicht mehr auszutauschen. Vielmehr soll das zu bearbeitende Werkstück an der Vorrichtung schnell und einfach gewechselt werden können.

Um eine rasche Verbindung bzw. Kopplung des Werkstückes mit dem Spann-Gehäuse der Vorrichtung zu erreichen, ist in einem Vormontageschritt das Werkstück mit einem Spannbolzen verbunden, der in die Durchgangsöffnung des Gehäuses der Vorrichtung eingesteckt ist. Der derart eingesetzte Spannbolzen ist mittels dreier Spannschieber oder Arretierbolzen in der Durchgangsöffnung des Gehäuses fixiert. Die Arretierbolzen sind radial beweglich in dem Gehäuse gelagert und werden trieblich mittels eines Treibringes bewegt, der durch ein Antriebsmittel, beispielsweise ein axial verfahrbarer Stellkolben, drehbar ist. Die Rotationsbewegungen des Treibringes werden durch an diesem angeformte Nocken oder Nasen an die Arretierbolzen weitergegeben, in denen zur Aufnahme der Nasen oder Nocken, Nuten eingearbeitet sind.

Zudem beschreibt die DE 11 20 839 ein selbstspannendes Backenfutter, das am Ende einer antreibbaren Spindel von Drehbänken und ähnlichen Maschinen betätigt ist. Dabei sollen Werkstücke zwischen zwei gegenüberliegenden Futterteilen eingespannt werden, die jeweils über eine Spiralkurve durch Verdrehen zugestellt sind. Die Futterteile sind in den Spiralkurven gelagert und werden mittels eines verdrehbar in dem Gehäuse gelagerten Ringes in radialer Richtung bewegt, um die Spannkraft auf das Werkstück auszuüben oder die entsprechende Durchgangsöffnung freizugeben, so dass das Werkstück ein- oder ausgebaut werden kann.

Nachteiligerweise sind zur trieblichen Kopplung des Treibringes an diesem für jeden der vorhandenen Arretierbolzen Anformungen vorzusehen, durch die eine kraft- oder formschlüssige Wirkverbindung zwischen den Treibring und dem jeweiligen Arretierbolzen hergestellt ist. Eine solche konstruktive Ausgestaltung des Treibringes sowie die triebliche Kopplung zwischen diesem und dem jeweiligen Arretierbolzen ist dabei äußerst kostenintensiv in deren Herstellung und zeitaufwändig in der Montage, denn zum einen sind die Anformungen in einem sehr eng bemessenen Toleranzfeld zu fertigen, und zum anderen bestehen die verwendeten Bauteile aus mehreren Schnittstellen, die einen erheblichen Montageaufwand bedeuten. Zudem sind die Drehbewegungen des Treibringes und die radiale Verstellung der Arretierbolzen störanfällig, da bei der Rotation des Treibringes und dessen Bewegungsumwandlung in radiale Zustellbewegungen Verkantungen entstehen können.

Solche Nullpunktspannsysteme werden als solche bezeichnet, da eine Vielzahl von zu bearbeitenden Werkstücken an Spannbolzen vormontiert werden können. Zur Bearbeitung der Werkstücke ist lediglich das erste Werkstück bezogen auf den Arbeitsbereich der Werkzeugmaschine auszumessen; jedes weitere zu bearbeitende Werkstück kann dann unverzüglich ohne weitere Ausmessungen von der Werkzeugmaschine bearbeitet werden, da die Position des Werkstückes bezogen auf die Position der Spann-Vorrichtung bekannt und vorgegeben ist.

Wenn jedoch durch die triebliche Verbindung zwischen dem Treibring und den eingesetzten Arretierbolzen ein entsprechendes Spiel vorhanden ist, führt dieses zwangsläufig dazu, dass Fehlertoleranzen bei der Einspannung des Spannbolzens an dem Spann-Gehäuse der Vorrichtung entstehen, die folglich auch zu Fehlern bei der Bearbeitung des Werkstückes führen. Demnach sind solche SpannVorrichtungen in der vorgegebenen Einspannlage der zu bearbeitenden Werkstücke fehlerbehaftet und es sind zeitaufwändige und somit kostenintensive Nachmessungen erforderlich, um zu gewährleisten, dass solche Fehlertoleranzen möglichst gering gehalten sind.

Ferner ist besonders nachteilig, dass bei der bekannt gewordenen Spann-Vorrichtung die Rotationsbewegung des Treibringes ohne Übersetzung in eine radiale Bewegung der Arretierbolzen umgewandelt ist. Bei dem Einspannvorgang ist es notwendig, den Spannbolzen mittels den Arretierbolzen möglichst schnell zu berühren. Dies bedeutet, dass die Zustellbewegungen der Arretierbolzen in einem Eilhubgang erfolgen sollen, so dass durch möglichst wenige Umdrehungen der Antriebsspindel oder durch axiale Zustellbewegungen eines Kolbens ein Kontakt zwischen den Arretierbolzen und dem Spannbolzen eintritt. In einem nachgeschalteten Spannhubgang sollen die Arretierbolzen derart mit dem Spannbolzen in Wirkkontakt treten, dass dieser zuverlässig und lageorientiert durch diese eingespannt ist. Die bekannt gewordene Spann-Vorrichtung weist jedoch zwischen der trieblichen Kopplung des Treibringes und den Arretierbolzen keinerlei Übersetzungen oder Getriebemittel auf, so dass die Umdrehung des Treibringes zu einer gleichförmigen bzw. gleichmäßigen radialen Zustellbewegung der Arretierbolzen umgewandelt ist.

Es ist daher Aufgabe der Erfindung, eine Vorrichtung der eingangs genannten Gattungen derart weiterzubilden, dass zum einen die Umwandlung der Rotationsbewegung des Treibringes in eine radiale Zustellbewegung für die verwendeten Arretierbolzen spielfrei und mit mindestens zwei unterschiedlichen Übersetzungen zustellen, die einen Eil- und einen Spannhub ermöglichen, und dass zum anderen die Fertigung sowie Montage der Treibringe und Arretierbolzen kostengünstig und ohne zeitlichen Mehraufwand bewerkstelligt werden kann.

Diese Aufgabe ist erfindungsgemäß durch die Merkmale des kennzeichnenden Teils von Patentanspruch 1 gelöst.

Weitere vorteilhafte Weiterbildungen der Erfindung ergeben sich aus den Unteransprüchen.

Dadurch, dass an der Innenseite des Treibringes eine in jedem Bereich der Arretierbolzen vorgesehene Steuerfläche oder Steuerkurve mit mindestens zwei unterschiedlichen Steigungen eingearbeitet ist, dass in den jeweiligen Arretierbolzen eine im Querschnitt U-förmige Aufnahmetasche eingearbeitet ist, in die der Treibring eingesetzt ist, und dass an der der Innenwand des Treibringes zugewandten Wand des Arretierbolzen eine Anlagefläche angebracht oder vorgesehen ist, die an der Steuerfläche oder Steuerkurve des Treibringes anliegt und in Abhängigkeit von der Rotationsrichtung des Treibringes den jeweiligen Arretierbolzen radial nach innen oder nach außen bewegt, ist erreicht, dass die Arretierbolzen sowohl in einem Eil-als auch in einem Spannhub bewegt werden können, so dass der in die Durchgangsöffnung des Gehäuses eingesetzten Spannbolzen, der das Werkstück trägt, zuverlässig und lageorientiert mit wenigen Umdrehungen der Antriebsspindel befestigt ist.

Wenn in der Durchgangsöffnung eine im Querschnitt U-förmige Führungsnut vorgesehen ist, in die der Treibring eingesetzt und in dieser drehbar gelagert ist, ist gewährleistet, dass der Treibring während der Rotationsbewegung nach innen und außen gehalten ist, so dass ein Verkanten des Treibringes nicht entsteht.

Die Arretierbolzen sind lageorientiert und axial bzw. radial verschiebbar in dem Gehäuse und in der Wand der Führungsnut gelagert, wodurch diese an zwei zueinander beabstandeten Positionen abgestützt sind, um eine zuverlässige und störungsfreie Bewegung zu erreichen.

In dem an den jeweiligen Arretierbolzen die U-förmige Aussparung vorgesehen ist und in den der Treibring in diese Aussparung eingesetzt ist, werden sowohl die Arretierbolzen als auch der Treibring in der Führungsnut durch einen mit dem Gehäuse verbundenen Deckel gehalten und deren jeweilige Bewegungen freigegeben.

Um die Zentrierung des Werkstückes an dem Spann-Gehäuse derart zu bewerkstelligen, dass jede vormontierte Baueinheit aus Werkstück und Spannbolzen eine identische Ausrichtung bezogen auf den Spannzustand an der Werkzeugmaschine aufweist, sind auf der Oberseite des Spannbolzen eine oder mehrere Zentriernasen vorgesehen oder angeformt, die mit an dem Werkstück angearbeiteten Anlageflächen zusammenwirken. Folglich sind die Werkstücke lageorientiert an dem Spannbolzen positioniert und eine vielfache Ausmessung des Werkstückes auf dessen Bearbeitungsposition bezogen auf die Werkzeugmaschine ist nicht erforderlich, da die Vorrichtung ortsfest mit dem Werkzeugtisch der Werkzeugmaschine gekoppelt ist und lediglich das neue Werkstück mit einem entsprechenden Spannbolzen an dem Spann-Gehäuse der Vorrichtung zu befestigen ist. Demnach ist mittels der erfindungsgemäßen Vorrichtung ein Nullpunktspannsystem für die Anwender zur Verfügung gestellt.

Es ist besonders vorteilhaft, wenn in dem Spannbolzen eine umlaufende Spannnut oder mehrere vereinzelte Spannnuten eingearbeitet sind, in die jeweils das freie Ende eines der Arretierbolzen im Spannzustand eingreift. An dem freien Ende der jeweiligen Arretierbolzen ist nämlich eine schräg verlaufende Spannfläche vorgesehen, die aus der Horizontalen von außen nach innen ansteigend geneigt ausgestaltet ist; wohingegen die Steigung der Spannnut an den Verlauf der Spannfläche der Arretierbolzen ausgerichtet ist, so dass diese als Anlage für die Spannfläche dient. Sobald nämlich die Arretierbolzen in die Spannnuten des Spannbolzen eingreifen, drückt die Spannfläche der Arretierbolzen auf die Anlagefläche der Führungsnut und es entsteht eine Zugkraft, die parallel zu der Längsachse der Durchgangsöffnung verläuft und wodurch der Spannbolzen in das Innere des Gehäuses hineingezogen ist. Somit entsteht eine spielfreie Anordnung zwischen dem Spannbolzen und dem Gehäuse, wodurch das zu bearbeitende Werkstück lageorientiert in identisch vorgegebenen Positionen gehalten ist.

Während des Eilhubs sind die Arretierbolzen mit einer möglichst hohen Zustellgeschwindigkeit in Richtung des Spannbolzens zu bewegen. Für diese Zustellbewegung der Arretierbolzen sind geringe Kräfte erforderlich. Sobald die Arretierbolzen in Wirkkontakt mit dem Spannbolzen gelangen, soll der Eilhubgang in einen Spannhubgang umgewandelt sein. Der Spannhubgang zeichnet sich dadurch aus, dass die Arretierbolzen eine sehr geringe Zustellgeschwindigkeit, jedoch eine hohe Spannkraft benötigen. Um dies zu erreichen, ist die Steuerbahn und die damit zusammenwirkenden Anlageflächen an den Arretierbolzen mit mindestens zwei unter schiedlichen Steigungen vorgesehen. Die Steigung für den Eilhub weist eine wesentlich höhere Neigung, beispielsweise eine parabolische oder sinusförmige Kontur, auf; wohingegen der Spannhubgang eine sehr flache Steigung aufweist. Der Übergangsbereich zwischen dem Spannhub und dem Eilhub wird mittels eines oder mehreren Radien erreicht, so dass die Anlagefläche der Arretierbolzen ohne Verkanten auf der Steuerfläche des Treibringes entlang gleiten, wenn der Treibring in eine der beiden Rotationsrichtungen bewegt ist.

In der Zeichnung ist eine erfindungsgemäße Vorrichtung und deren Spann-Gehäuse, durch die ein zu bearbeitendes Werkstück an einem Werkzeugtisch einer Werkzeugmaschine gehalten ist, zu entnehmen, die nachfolgend näher erläutert sind. Im Einzelnen zeigt:
- Figur 1a: ein Spann- Gehäuse, in das eine Durchgangsöffnung eingearbeitet ist, in perspektivischer Ansicht,
- Figur 1b: das Spann-Gehäuse gemäß Figur 1a, in Explosionsdarstellung, mit einem Treibring und drei trieblich mit drei diesen verbundenen Arretierbolzen, die mittels eines Deckels in der Durchgangsöffnung des Gehäuses lageorientiert gehaltten sind,
- Figur 2: eine Vorrichtung und das Spann-Gehäuse gemäß Figur 1b im Schnitt, das an einem Werkzeugtisch einer Werkzeugmaschine mittels einer Befestigungsschraube angebracht ist und durch die ein zu bearbeiten des Werkstück über einen Spannbolzen an dem Gehäuse abgestützt ist,
- Figur 3: eine vergrößerte Darstellung des Treibringes mit den drei Arretierbolzen und einer trieblich mit dem Treibring gekoppelten Antriebsspindel, gemäß Figur 2,
- Figur 4a: ein vergrößerter Ausschnitt zwischen dem Treibring und einem der Arretierbolzen gemäß Figur 3, in der Ausgangsposition, mit einer an der Innenseite des Treibringes vorgesehenen Steuerfläche und mit einer dem Arretierbolzen zugeordneten Anlagefläche, die mit der Steuerfläche des Treibringes während der Rotation des Treibringes zusammenwirkt und auf diesem entlang gleitet,
- Figur 4b: der Treibring und der Arretierbolzen gemäß Figur 4a, während des Eilhubs und
- Figur 4c: den Treibring und den Arretierbolzen gemäß Figur 4b, während des Spannhubs.

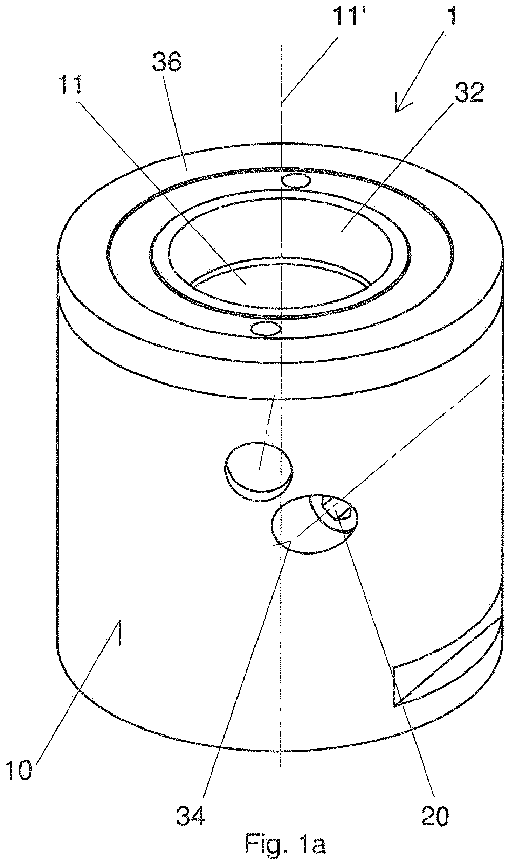

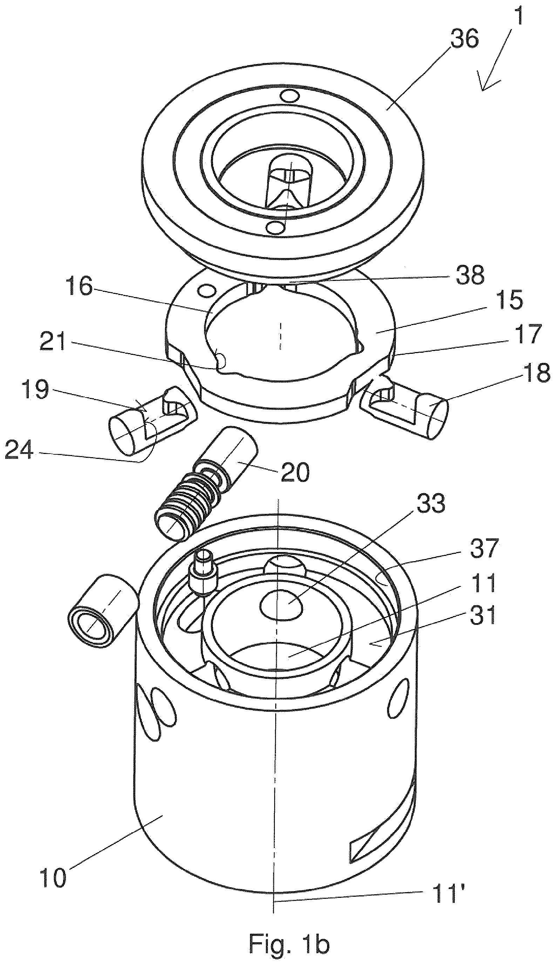

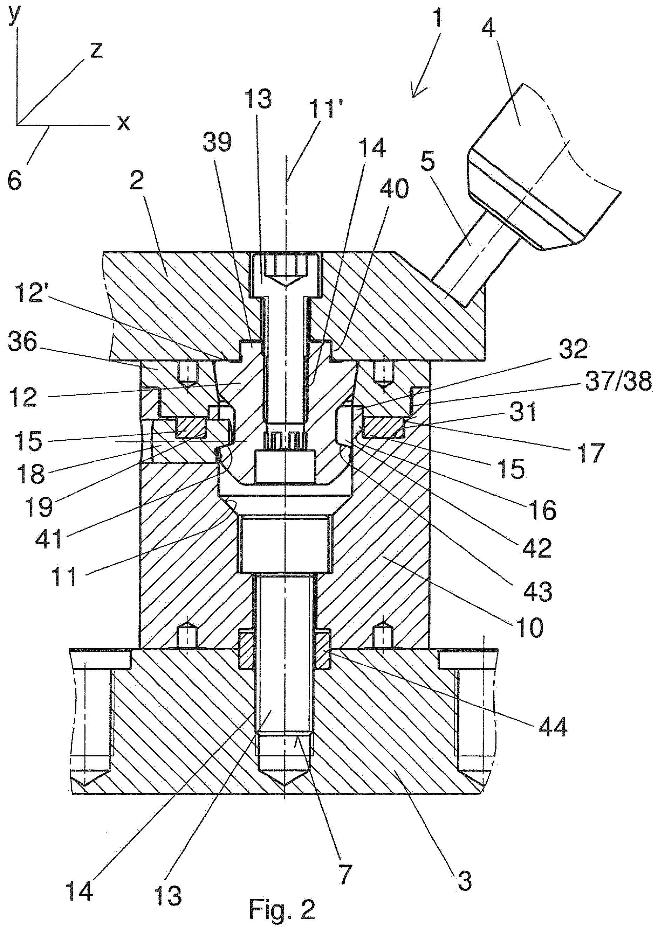

Aus den Figuren 1a, 1b und 2 ist eine Vorrichtung 1 zu entnehmen, durch die ein Werkstück 2 an einem Werkzeugtisch 3 einer Werkzeugmaschine 4 auswechselbar befestigt ist. An der Werkzeugmaschine 4 ist ein Werkzeug 5 angebracht, durch das das Werkstück 2 durch die Werkzeugmaschine 4 bearbeitet werden soll. Um zu vermeiden, dass bei jedem Wechsel des Werkstückes 2 an der Werkzeugmaschine 4 erneut die Position für die Bearbeitung des Werkstückes 2 zu erfolgen hat, dient die erfindungsgemäße Spann-Vorrichtung 1, da diese über ein nachfolgend näher erläutertes Kupplungssystem für jedes zu bearbeitende Werkstück 2 in einer nahezu identischen Position bezogen auf die Werkzeugmaschine 4 an dem Werkzeugtisch 3 zur Verfügung stellt.

Zudem soll die Vorrichtung 1 ein Schnellspann-System zur Verfügung stellen, um beim Auswechseln des Werkzeuges eine möglichst geringe Stillstandszeit der Werkzeugmaschine 4 zu erhalten. Im Wesentlichen dient demnach die Vorrichtung 1 als Zentrier- und Halteelement für das Werkstück 2 an dem Werkzeugtisch 3 der Werkzeugmaschine 4.

Insbesondere Figur 2 ist dabei zu entnehmen, dass die räumliche Ausrichtung des Werkstückes 2 an dem Werkzeugtisch 4 mit einem üblichen X-Y-Z-Koordinatensystem 6 dargestellt ist. Die Vorrichtung 1 besteht somit aus dem Werkstück 2, aus zu verbindenden Werkzeugtisch 3 und einem der Vorrichtung 1 zugeordneten Spann-Gehäuse 10, das zylinderförmig ausgestaltet ist. In das Gehäuse 10 ist eine Durchgangs-öffnung 11 eingearbeitet, deren Längsachse mit der Bezugsziffer 11' versehen ist. Die Längsachse 11'und die Rotationsachse des Gehäuses 10 sind demnach fluchend zueinander ausgerichtet. Zudem weist die Durchgangsöffnung 11 unterschiedlich bemessene Abschnitte auf, die bezogen auf die dargestellte Einbausituation in Y Richtung des Koordinatensystems 6 ansteigen und somit von unten nach oben größer werden.

Zur Befestigung des Gehäuses 10 an dem Werkzeugtisch 3 ist eine Befestigungsschraube 13 vorgesehen, die in die Durchgangsöffnung 11 eingesetzt ist und in einem in dem Werkzeugtisch 3 eingearbeiteten Gewinde 14 eingetreten werden kann. Um das Gehäuse 10 zentriert an dem Werkzeugtisch 3 zu halten, ist eine Zentrierhülse 44 vorgesehen, die die Befestigungsschraube 13 umgreift und in entsprechende in dem Gehäuse 10 und dem Werkzeugtisch 3 eingearbeitete Freisparungen eingesetzt ist, die folglich als Zentrierhilfen dienen. Somit kann das Gehäuse 10 in einer exakt vorbestimmten Position an dem Werkzeugtisch 3 arretiert werden. Darüber hinaus kann das Gehäuse 10 permanent an dem Werkzeugtisch 3 befestigt sein und lediglich das zu bearbeitende Werkstück 2 wird über ein entsprechend näher erläutertes Kupplungssystem schnell und positionsgenau ausgewechselt.

Das Kupplungssystem für das Werkstück 2 besteht im Wesentlichen aus einem Spannbolzen 12, der mittels einer weiteren Befestigungsschraube 13 an dem Werkstück 2 in einem Vormontageschritt angebracht ist. Die Befestigungsschraube 13 durchgreift demnach das Werkstück 2 vollständig und ist in eine im Zentrum des Spannbolzen 12 eingearbeitete Gewinde 14 eingetreten. Folglich verbindet die Befestigungsschraube 13 den Spannbolzen 12 mit dem Werkstück 2 und der Spannbolzen 12 steht als Zentrier- und Halteelement zur Kopplung mit dem Gehäuse 10 der Vorrichtung 1 zur Verfügung bzw. kann als solcher genutzt werden.

In das Werkstück 2 sind im Bereich des Spannbolzen 12 eine ringförmige Anformung eingearbeitet, die mit einer auf der Oberseite 12'des Spannbolzen 12 abstehende an Formung oder Zentriernase 39 zusammen wirkt. Die Aussparung in dem Werkstück 2 dient folglich als Anlagefläche 40, um das Werkstück 2 und den Spannbolzen 12 in einer exakt vorgegebenen Ausrichtung zueinander zu befestigen. Mithilfe der Zentrierhülse 44 und der Zentriernase 39 an dem Spannbolzen 12, die in die Anlagefläche 40 des Werkstückes 2 eingreift, ist demnach das Werkstück 2 in einer bekannten und vorgegebenen Position an dem Werkzeugtisch 3 gehalten und das Werkstück 2 sowie der Spannbolzen 12 können, wie nachfolgend näher erläutert, aus der Durchgangsöffnung 11 des Gehäuses 10 herausgezogen bzw. in diese eingesetzt werden.

An dem Außenumfang des Spannbolzen 12 ist eine als weitere Zentrierhilfe dienende Mantelfläche angeformt, die unmittelbar benachbart zu dem Werkstück 2 verläuft und mit der Innenseite der Durchgangsöffnung 11 zusammenwirkt, sodass der Spannbolzen 12 zentriert in der Durchgangsöffnung 11 abgestützt ist.

In Figur 2 ist die Befestigung des Spannbolzen 12 in der Durchgangsöffnung 11 abgebildet. Zu diesem Zweck ist seitlich neben der Durchgangsöffnung 11 eine im Querschnitt U-förmig ausgestaltete Führungsnut 31 eingearbeitet, in die ein Treibring 15 eingelegt ist. Der Treibring 15 ist trieblich mit drei Arretierbolzen 18 gekoppelt. Die Arretierbolzen 18 sind in zwei beabstandet fluchtend gegenüberliegenden Durchgangsbohrungen 33 eingesteckt, die einerseits in einer Wand 32 der Führungsnut 31 und andererseits in der Wand des Gehäuses 10 eingearbeitet sind. Die Arretierbolzen 18 verlaufen demnach radial und sind der Längsachse 11' bzw. der Durchgangsöffnung 11 zugewandt. Bezogen auf die Y-Achse des Koordinatensystems 6 sind die drei Arretierbolzen 18 unterhalb des Treibringes 15 angeordnet, sodass die Arretierbolzen 18 durch den Treibring 15 abgedeckt sind. Um eine zuverlässige Lagerung der beweglichen Bauteile aus Treibring 15 und Arretierbolzen 18 zu erreichen, ist ein Deckel 36 vorzusehen, der ein Außengewinde 38 aufweist. In die Seitenwand der Durchgangsöffnung 11 ist ein Innengewinde 37 eingearbeitet, in das das Außengelände 38 des Deckels 36 einsehbar ist. Folglich kann der Deckel 36 durch Eindrehen in das Innengewinde 37 des Gehäuses 10 in Richtung des Werkzeugtisches 3 zugestellt werden, wodurch der Treibring 15 und die drei Arretierbolzen 18 in der Führungsnut 31 gehalten sind.

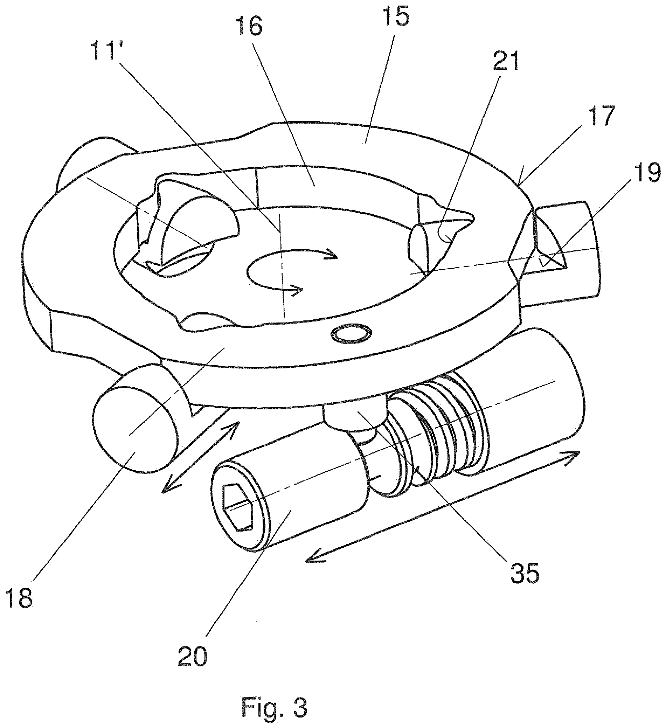

Aus den Figuren 2 und 3 ist ersichtlich, dass der Treibring 15 drehbeweglich in der Führungsnot 31 gehalten ist, da an dem Treibring 15 ein entgegen der y-Achse ausgerichteter Zapfen 35 an diesem angeformt ist, der in trieblicher Wirkverbindung mit einer Antriebsspindel 20 steht. Die Antriebsspindel 20 ist in einer in dem Gehäuse 10 eingearbeiteten Tasche 34 drehbar gelagert, wodurch die Antriebsspindel 20 während ihrer Drehbewegung eine Zustellkraft erzeugt, die auf den Treibring 15 einwirkt. Über den Gewindegang, der in die Antriebsspindel 20 eingearbeitet ist wird demnach der Zapfen 35 linear bewegt, wodurch auf den Treibring 15 eine Rotation um die Längsachse 11'entsteht.

Aufgrund der trieblichen Kopplung zwischen dem Treibring 15 und den drei Arretierbolzen 18 wird die Rotation des Treibringes 15 in jeweils eine synchron verlaufende radiale Bewegung der Arretierbolzen 19 übertragen bzw. umgewandelt. In Abhängigkeit von der Umdrehungsrichtung des Treibringes 15 bewegen sich demnach die Arretierbolzen 18 in Richtung der Längsachse 11' und verkleinern somit die Durchgangsöffnung 11, oder die Arretierbolzen 18 werden aus dieser herausgezogen. Da der Spannbolzen 12 in der Durchgangsöffnung 11 angeordnet ist und die Arretierbolzen 18 in Richtung des Spannbolzen 12 verfahren werden, entsteht durch die Arretierbolzen 18 eine form- oder kraftschlüssige Verbindung zwischen den Arretierbolzen 18 und dem Spannbolzen 12. Um zusätzliche Zugkräfte auf den Spannbolzen 12 übertragen zu können, durch die dieser und das Werkstück 2 auf die freie Stirnseite des Gehäuses 10 aufgedrückt werden sollen, ist in dem Spannbolzen 12 eine umlaufende Spannnuten 42 eingearbeitet, die eine schrägverlaufende Anlagefläche 43 aufweist. Die Anlagefläche 43 ist von außen nach innen nach oben ansteigend geneigt und an der freien Stirnseite jedes der Arretierbolzen 18 ist eine Spannfläche 41 angearbeitet, deren Steigung an die Steigung der Anlagefläche 43 des Spannbolzen 12 angepasst ist. Sobald demnach die Arretierbolzen 18 mit ihrer Spannfläche 41 in Wirkkontakt mit der Anlagefläche 43 des Spannbolzen 12 gelangen, entsteht eine entgegen der y-Achse des Koordinatensystems 6 gerichtete Zugkraft, durch die der Spannbolzen 12 und damit das Werkstück 2 in die Durchgangsöffnung 11 bzw. auf die freie Stirnseite des Gehäuses 10 eingepresst bzw. aufgedrückt sind.

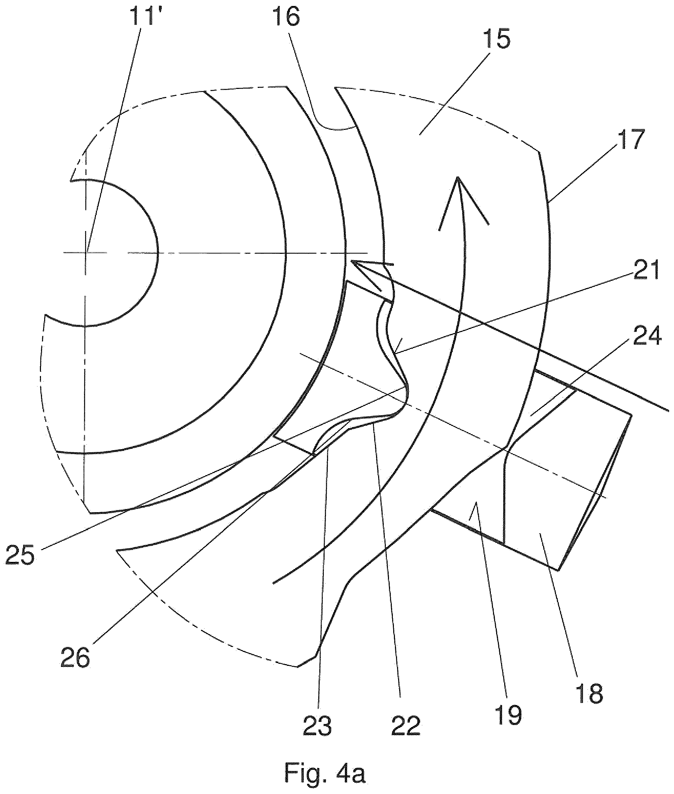

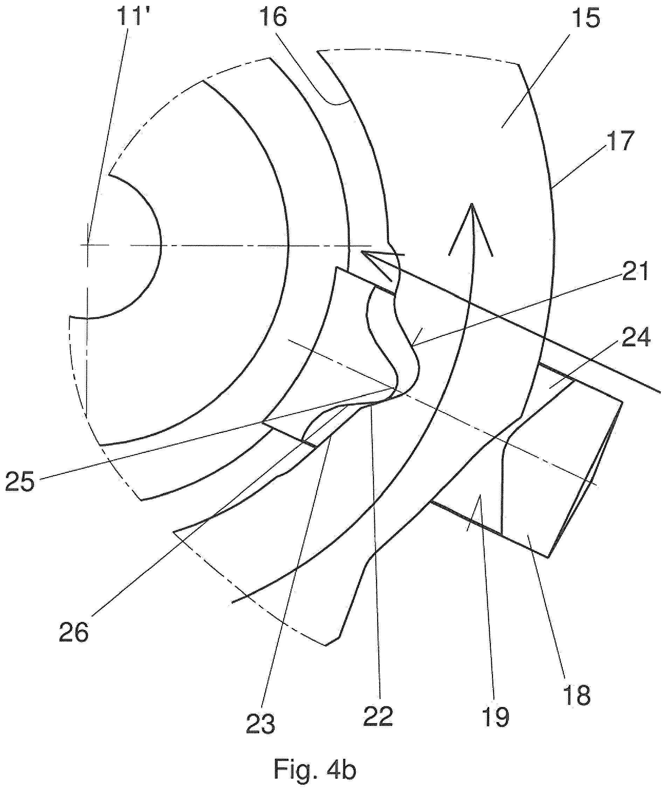

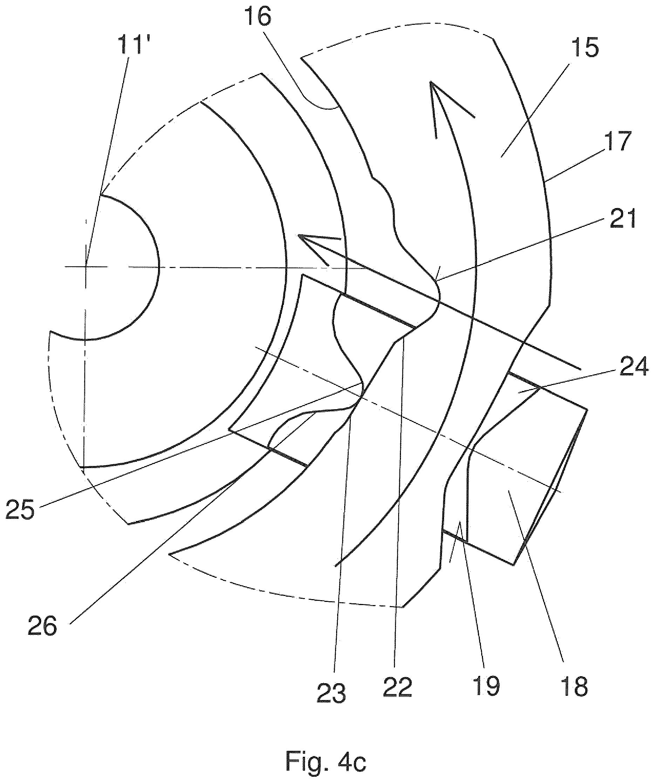

Den Figuren 3, 4a, 4b und 4c ist zu entnehmen, dass in jedem der Arretierbolzen 18 eine im Querschnitt U-förmige Aufnahmetasche 19 eingearbeitet ist. Die Kontur der Aufnahmetasche 19 ist dabei an die Kontur des Treibringes 15 oder vice versa angepasst, so dass der Treibring 15 in jede der Aufnahmetaschen 19 der Arretierbolzen 18 einsetzbar ist. Die Innenwand 16 des Treibringes 15 weist eine zweiteilige Steuerfläche 21 auf, die aus zwei Steigungen zur Erzeugung eines Eilhubgangs und eines Spannhubgangs ermöglicht. Bei der Verbindung zwischen dem Treibring 15 und dem jeweiligen Arretierbolzen 18 handelt es sich um eine Art Verzahnung, da eine Anlagefläche 25 formschlüssig in dieser Steuerfläche 21 eingreift.

Die in Figur 4a dargestellte Position des Treibringes 15 und der Arretierbolzen 18 entsprechen dabei der Ausgangsposition. Dies bedeutet, dass die Arretierbolzen 18 die Durchgangsöffnung 11 vollständig freigegeben, sodass der Spannbolzen 18 in diese eingesetzt oder herausgezogen werden kann. Sobald über die Antriebsspindel 20 auf den Treibring 15 eine Betätigungskraft einwirkt, entsteht eine Drehung des Treibringes 15 in entgegengesetzt zu dem Uhrzeigersinn. Durch diese Drehbewegung des Treibringes 15 wird jeder der Arretierbolzen 18 radial in die Durchgangsöffnung 11 bewegt, sodass die Arretierbolzen 18 in Wirkkontakt mit der Anlagefläche 43 des Spannbolzen 18 gelangen.

In die der Innenwand 16 des Treibringes 15 zugewandten Seite der Aufnahmetasche 19 der Arretierbolzen 18 ist dabei eine Anlagefläche 25 angearbeitet oder vorgesehen, die in die sinusförmig ausgestaltete Steuerfläche 21 eingreift und in permanentem Wirkkontakt mit dieser steht. Die Steuerfläche 21 weist zwei unterschiedlich geneigte Steigungen auf, die als Eilhubfläche 22 und als Spannhubfläche 23 definiert sind. Durch die mit einer wesentlich größer ausgestalteten Steigung versehene Eilhubfläche 22 im Vergleich mit der geringeren Steigung der Spannhubfläche 23 soll nämlich erreicht sein, dass jeder der Arretierbolzen 18 mit einer möglichst hohen Zustellgeschwindigkeit in Richtung des Spannbolzen 12 oder von diesen weg bewegt werden. Der Treibring 15 wird nämlich mit einer konstanten Umdrehungsgeschwindigkeit durch die Antriebsspindel 20 angetrieben, so dass zwischen dem Treibring 15 und dem jeweiligen Arretierbolzen 18 ein Getriebe mit mindestens zwei Übersetzungsverhältnissen vorzusehen ist. Während des Eilhubgangs, der durch die Eilhubfläche 22 geschaffen ist, soll der Arretierbolzen 18 möglichst schnell bewegt und die Zustellkraft gering gehalten sein.

In Figur 4b ist eine Zwischenstellung des Arretierbolzens 18 zu entnehmen, der nunmehr teilweise in die Durchgangsöffnung 11 hineinragt bzw. in diese eintaucht. Die Anlagefläche 25 des Arretierbolzens 18 gleitet entlang der Steuerfläche 21, und zwar in dem Bereich der als Eilhubfläche 22 gekennzeichnet ist.

Durch die Drehung des Treibringes 15 entgegen des Uhrzeigersinns und der nachgeschalteten Anordnung der Eilhubfläche 22 wirkt eine Zustellkraft auf die Anlagefläche 25 ein, die gering ist; jedoch ermöglicht die große Steigung eine hohe Zustellgeschwindigkeit.

Der Übergang zwischen der Eilhubfläche 22 und der Spannhubfläche 23 ist mit einem vorgegebenen Radius ausgestattet. Aufgrund der bekannten und vorherrschenden geometrischen Verhältnisse zur Einspannung des Spannbolzen 12 sind in diesem Bereich die Arretierbolzen 18 unmittelbar vor der Berührung mit der Anlagefläche 43 des Spannbolzen 18 verfahren. Der Eilhub der Arretierbolzen 18 soll nunmehr durch die Spannhubfläche 23 ersetzt werden.

Wie dies Figur 4c zu entnehmen ist, gleitet die Anlagefläche 25 auf der Spannhubfläche 23, die eine geringere Steigung oder Neigung als die Eilhubfläche 22 aufweist entlang. Die Vorwärtsbewegung des Arretierbolzens 18 soll gering sein; es wird jedoch eine hohe Spannkraft benötigt, um die Arretierbolzen 18 in einem zuverlässigen Wirkkontakt mit dem Spannbolzen 12 zu bringen.

Die gegenüberliegend zu der Anlagefläche 25 verlaufende Wand der Aufnahmetasche 19 ist mit einem Freiraum 24 zu der Außenwand 17 des Treibringes 15 angeordnet, so dass die Rotationsbewegung des Treibringes 15 von dem Freiraum 24 freigegeben ist und folglich die Bewegung des Treibringes 15 und der Arretierbolzen 18 nicht behindern.

In jedem Bereich, in dem ein Arretierbolzen 18 mit dem Treibring 15 trieblich gekoppelt ist, ist folglich an den Treibring 15 eine entsprechende Steuerfläche 21 auf der Innenwand 16 und eine Anlagefläche 25 vorgesehen, durch die eine Übersetzung der konstanten Drehbewegung des Treibringes 15 in zwei radiale Bewegungen des Arretierbolzen 18 umgewandelt ist, die nämlich mit einem Eilhubbgang und einem Spannhubgang betrieben sind. Der Eilhubgang zeichnet sich durch eine schnelle Zustellbewegung mit einer geringen Kraft und der Spannhubgang durch eine langsame oder geringe Bewegungsgeschwindigkeit mit einer hohen Kraft aus, die durch die Neigungen der beiden Eilhubflächen 22 und der Spannhubfläche 23 erreicht ist.

Es ist ebenso vorstellbar, die Reihenfolge von Treibring 15 und Arretierbolzen 18 in der Führungsnut 31 umzukehren, so dass durch die Deckel 36 zunächst die Arretierbolzen 18 und anschließend der Treibring 15 in die Führungsnut 31 eingedrückt sind.

Hierfür kann in den Treibring 15 eine U-förmige Aufnahmetasche 19 eingearbeitet sein und die Arretierbolzen 18 sind in diese eingesetzt.

Der Treibring 15 wird mittels der Antriebsspindel 20 um einen begrenzten Verstellwinkel α verdreht, der von der Länge des in der Antriebsspindel eingearbeiteten Gewindes abhängt.

Bereits vier bis sechs Umdrehungen der Antriebsspindel 20 sind ausreichend, um die Arretierbolzen 18 sowohl zuzustellen als auch den Spannbolzen 12 zu umgreifen und diesen einzuspannen.

Es ist technisch ohne weiteres möglich, lediglich zwei Arretierbolzen 18 zu verwenden, die dann fluchtend gegenüberliegend und den Spannbolzen 12 umgreifen. Um die Auflagefläche zwischen den beiden Arretierbolzen 18 und dem Spannbolzen 12 zu vergrößern, kann an den freien Enden der Arretierbolzen 18 eine Anformung vorgesehen sein, die ringförmig oder gekrümmt ausgestaltet ist. Folglich umgreift die Anformung den Spannbolzen 12, insbesondere wenn in diesem eine umlaufende Spannnut 42 eingearbeitet ist, die von der jeweiligen Anformung als Anlage- oder Stützfläche verwendet werden kann. Demnach ist die Auflageflläche zwischen dem Arretierbolzen 18 und dem Spannbolzen 12 durch die Anformung vergrößert und die Anzahl der Arretierbolzen 18 kann reduziert werden.

Bei drei verwendeten Arretierbolzen 18 liegen diese in einem Teilungswinkel von 120° zueinander. Bei einem Vielfachen von Arretierbolzen 18 sind diese gleichmäßig verteilt über den Umfang des Spannbolzen 12 angeordnet.

## Patentansprüche

1. Vorrichtung (1), durch die ein zu bearbeitendes Werkstück (2) an einem Werkzeugtisch (3) einer Werkzeugmaschine (4) gehalten ist, bestehend aus:
• einem Spann-Gehäuse (10), in das eine Durchgangsöffnung (11) eingearbeitet ist, in die ein Spannbolzen (12) zur Abstützung des Werkstücks (2) an dem Gehäuse (10) der Vorrichtung (1) eingesetzt ist,
• einem in dem Gehäuse (10) drehbar gelagerten Treibring (15), der in trieblicher Wirkverbindung mit einer in dem Gehäuse (10) eingesetzten Antriebsspindel (20) steht, durch die der Treibring (15) um die Längsachse (11') der Durchgangsöffnung (11) in einem vorgegebenen Winkelbereich (α) verstellbar ist
• und aus mindestens zwei Arretierbolzen (18), die der Längsachse (11') der Durchgangsöffnung (11) zugewandt, radial in dem Gehäuse (10) beweglich gelagert und die jeweils trieblich mit dem Treibring (15) gekoppelt sind und durch die der Spannbolzen (12) in der Durchgangsöffnung (11) des Gehäuses (10) im Spannzustand arretiert oder in den Ausgangszustand freigegeben ist,
**dadurch gekennzeichnet,**
**dass** an der Innenseite (16) des Treibringes (15) eine in jedem Bereich der Arretierbolzen (18) vorgesehene Steuerfläche (21) oder Steuerkurve mit mindestens zwei unterschiedlichen Steigungen (22, 23) angearbeitet ist, dass in den jeweiligen Arretierbolzen (18) eine im Querschnitt U-förmige Aufnahmetasche (19) angearbeitet ist, in die der Treibring (15) eingesetzt ist, und dass an der der Innenwand (16) des Treibrings (15) zugewandten Wand des Arretierbolzens (18) eine Anlagefläche (25) angearbeitet oder vorgesehen ist, die an der Steuerfläche (21) oder Steuerkurve des Treibrings (15) anliegt und in Abhängigkeit von der Rotationsrichtung des Treibringes (15) den jeweiligen Arretierbolzen (18) radial nach innen oder nach außen bewegt.

2. Vorrichtung nach Anspruch 1,
**dadurch gekennzeichnet,**
**dass** das Gehäuse (10) durch eine in die Durchgangsöffnung (11) eingreifende Befestigungsschraube (14) mit dem Werkzeugtisch (3) lageorientiert fixiert ist,

3. Vorrichtung nach Anspruch 1 oder 2,
**dadurch gekennzeichnet,**
**dass** in der Durchgangsöffnung (11) eine im Querschnitt U-förmige Führungsnut (31) vorgesehen ist, in die der Treibring (15) eingesetzt und in dieser drehbar gelagert ist.

4. Vorrichtung nach Anspruch 3,
**dadurch gekennzeichnet,**
**dass** in dem Gehäuse (10) und in der der Längsachse (11') der Durchgangsöffnung (11) zugewandten Wand (32) der Führungsnut (31) jeweils eine Durchgangsbohrung (33) eingearbeitet ist, die fluchtend zueinander verlaufen, und dass einer der Arretierbolzen (18) verschiebbar in den beiden gegenüberliegenden Durchgangsbohrungen (33) des Gehäuses (10) und der Führungsnut (31) gehalten sind.

5. Vorrichtung nach einem der vorgenannten Ansprüche,
**dadurch gekennzeichnet,**
**dass** die Antriebsspindel (20) in einer in dem Gehäuse (10) eingearbeiteten Tasche (34) drehbar angeordnet ist, dass an dem Treibring (15) ein parallel zu der Längsachse (11') der Durchgangsöffnung (10) verlaufender Zapfen (35) angeformt oder angebracht ist, der trieblich mit der Antriebsspindel (20) gekoppelt ist, und dass durch die Rotation der Antriebsspindel (20) der Treibring (15) über den Zapfen (35) rotierbar ist.

6. Vorrichtung nach einem der vorgenannten Ansprüche 3 bis 5,
**dadurch gekennzeichnet,**
**dass** die jeweiligen Arretierbolzen (18) durch den Treibring (15) in der Führungsnut (31) gehalten sind und dass der Treibring (15) mittels eines Deckels (36) an dem Gehäuse (10) abgestützt ist.

7. 'Vorrichtung nach Anspruch 6,
**dadurch gekennzeichnet,**
**dass** in dem Gehäuse (10) ein Innengewinde (37) eingearbeitet und an dem Deckel (36) ein Außengewinde (38) vorgesehen ist und dass der Deckel (36) beim Einschrauben in das Innengewinde (37) des Gehäuses (10) den Treibring (15) in der Führungsnut (31) einspannt.

8. Vorrichtung nach einem der vorgenannten Ansprüche,
**dadurch gekennzeichnet,**
**dass** jeder Arretierbolzen (18) eine geneigte Spannfläche (41) aufweist, dass in den Spannbolzen (12) eine umlaufende oder mehrere vereinzelte Spannnuten (42) vorgesehen sind, die eine nach außen abfallende Anlagefläche (43) aufweisen, und dass die jeweilige Spannfläche (41) der Arretierbolzen (18) im Spannzustand auf die Anlagefläche (43) des Spannbolzens (12) aufliegen und gemeinsam mit dieser eine Zugkraft bilden, durch die der Spannbolzen (12) parallel zu der Längsachse (11') der Durchgangsöffnung (11) gehalten ist.

9. Vorrichtung nach einem der vorgenannten Ansprüche,
**dadurch gekennzeichnet,**
**dass** auf der dem Werkstück (2) zugewandten Oberfläche (12') des Spannbolzens (12) eine ringförmige oder mehreckige Zentriernase (39) vorgesehen ist, die mit einer in dem Werkstück (2) eingearbeiteten Anlagefläche (40) zur Ausrichtung des Werkstückes (2) bezogen auf die Längsachse (11') des Gehäuses (10) zusammenwirkt.

10. Vorrichtung nach einem der vorgenannten Ansprüche,
**dadurch gekennzeichnet,**
**dass** zwischen dem Gehäuse (10) und dem Werkzeugtisch (3) eine Zentrierhülse (44) vorgesehen ist, durch die die Befestigungsschraube (13) zwischen dem Gehäuse (10) und dem Werkzeugtisch (3) fluchtend zu der Längsachse (11') der Durchgangsöffnung (11) ausgerichtet ist.

11. Vorrichtung nach einem der vorgenannten Ansprüche,
**dadurch gekennzeichnet,**
**dass** die Steuerbahn oder Steuerfläche (21) des Treibringes (15) eine in das Innere des Treibringes (15) gerichtete Kontur aufweist und dass die Kontur der Steuerkurve oder Steuerfläche 0,21 Din. Bowles und im Bereich der Innenwand (16) des Treibringes (15) Linear ausgestaltet ist und dass die Anlagefläche (25) des jeweiligen Arretierbolzen (18) an die Kontur der Steuerkurve oder Steuerfläche (21) angepasst ist und mit dieser in wir Kontakt steht.

12. Vorrichtung nach einem der vorgenannten Ansprüche,
**dadurch gekennzeichnet,**
**dass** zwischen der Außenwand (17) des Treibringes (15) und der dieser benachbart verlaufenden Seitenwand der U-förmigen Aufnahmetasche (19) des jeweiligen Arretierbolzen (18) ein Freiraum (24) vorgesehen ist, durch den die Drehbewegung des Treibringes (15) freigegeben ist.

13. Vorrichtung nach einem der vorgenannten Ansprüche,
**dadurch gekennzeichnet,**
**dass** an mindestens einem der Arretierbolzen (18) eine gebogene oder gekrümmte Anformung vorgesehen ist, die mit dem Spannbolzen (12) in Wirkkontakt gelangt und diesen, zumindest bereichsweise, umgreift, und dass die Anformung den Spannbolzen (12) in der Durchgangsöffnung (11) arretiert.

14. Vorrichtung nach einem der vorgenannten Ansprüche,
**dadurch gekennzeichnet,**
**dass** zwei der verwendeten Arretierbolzen (18) fluchtend gegenüberliegenliegen oder dass drei der Arretierbolzen (18) in einem Winkel von 120° zueinander verlaufen oder dass jedes Vielfache von Arretierbolzen (18) über den Umfang des Spannbolzens (12) gleichmäßig verteilt angeordnet sind.

15. Vorrichtung nach Anspruch 1 oder 12,
**dadurch gekennzeichnet,**
**dass** die Steuerfläche (21, 22, 23) des Treibringes (15) bezogen auf die Längsachse (11') von dieser abgewandt nach außen gekrümmt ist, und dass die Anlagefläche (25) des Arretierbolzens (18) in die Steuerfläche (21, 22, 23) eintaucht und dass durch die Steuerfläche (21, 22, 23) eine Zustellkraft von dem Treibring (18) auf den jeweiligen Arretierbolzen (18) über die Anlagefläche (25) übertragen ist.

## Claims

1. A fixture (1) by means of which a workpiece (2) to be machined is held on a tool table (3) of a machine tool (4), consisting of:
a clamping housing (10) into which a passage opening (11) is worked, into which a clamping pin (12) is inserted for supporting the workpiece (2) on the housing (10) of the fixture (1),
a driving ring (15) mounted in the housing (10) in such a way as to be able to rotate, which is in a driving active connection with a driving spindle (20) inserted in the housing (10), by means of which the driving ring (15) can be adjusted about the longitudinal axis (11') of the passage opening (11) within a specified angle range (a)
and of at least two locking pins (18) facing the longitudinal axis (11') of the passage opening (11), mounted radially in the housing (10) so as to be able to move, and each of which is connected to the driving ring (15) in a driving arrangement, by means of which the clamping pin (12) is locked in the passage opening (11) of the housing (10) when in the clamped condition or released when in the initial status,
**characterised in that**,
a control surface (21) or control cam with at least two different pitches (22, 23) is worked onto the inside (16) of the driving ring (15) in each area of the locking pins (18), that an accommodating pocket (19) with a U-shaped cross section is worked into the corresponding locking pins (18) into which the driving ring (15) is inserted, and that a contact surface (25) is worked onto or provided on the wall of the locking pin (18) facing the inner wall (16) of the driving ring (15) and the contact surface (25) is in contact with the control surface (21) or control cam of the driving ring (15) and moves the corresponding locking pin (18) radially inwards or outwards depending on the direction of rotation of the driving ring (15).

2. The fixture in accordance with Claim 1,
**characterised in that**,
a fastening screw (14) engaging in the passage opening (11) fixes the housing (10) onto the tool table (3) in an oriented position.

3. The fixture in accordance with Claim 1 or 2,
**characterised in that**,
a guide groove (31) with a U-shaped cross section is provided in the passage opening (11) into which guide groove (31) the driving ring (15) is inserted and mounted within it in a rotating arrangement.

4. The fixture in accordance with Claim 3,
**characterised in that**,
one passage bore (33) each is worked into the housing (10) and in the wall (32) of the guide groove (31) facing toward the longitudinal axis (11') of the passage opening (11), and they run flush with one another, and that one of the locking pins (18) is held in a moving arrangement in the two opposite passage bores (33) of the housing (10) and the guide groove (31).

5. The fixture in accordance with one of the aforementioned claims,
**characterised in that**,
the driving spindle (20) is positioned in a rotating arrangement in a pocket (34) worked into the housing (10), that a peg (35) running parallel to the longitudinal axis (11') of the passage opening (11) is formed on or attached to the driving ring (15) and is linked to the driving spindle (20) in a driving connection, and that the rotation of the driving spindle (20) means the driving ring (15) can be rotated about the peg (35).

6. The fixture in accordance with one of the aforementioned claims 3 to 5,
**characterised in that**,
the corresponding locking pins (18) are held in the guide groove (31) by the driving ring (15) and that the driving ring (15) is supported on the housing (10) by means of a cover (36).

7. The fixture in accordance with Claim 6,
**characterised in that**,
an internal thread (37) is worked into the housing (10) and an external thread (38) is provided on the cover (36) and that the cover (36) clamps the driving ring (15) in the guide groove (31) when it is screwed into the internal thread (37) of the housing (10).

8. The fixture in accordance with one of the aforementioned claims,
**characterised in that**,
each locking pin (18) has an angled clamping surface (41), that a circumferential clamping groove (42) or several individual clamping grooves (42) is/are worked into the clamping pin (12) and these clamping grooves (42) have a contact surface (43) sloping downwards and outwards, and that the corresponding clamping surface (41) of the locking pins (18) make contact with the contact surface (43) of the clamping pin (12) when in the clamped condition and jointly with this create a tensile force by means of which the clamping pin (12) is held parallel with the longitudinal axis (11') of the passage opening (11).

9. The fixture in accordance with one of the aforementioned claims,
**characterised in that**,
a ring-shaped or polygonal centring projection (39) is provided on the surface (12') of the clamping pin (12) facing the workpiece (2) and this projection (39) interacts with a contact surface (40) worked into the workpiece (2) for aligning the workpiece (2) in relation to the longitudinal axis (11') of the housing (10).

10. The fixture in accordance with one of the aforementioned claims,
**characterised in that**,
a centring sleeve (44) is provided between the housing (10) and the tool table (3) by means of which the fastening screw (13) between the housing (10) and the tool table (3) is aligned flush with the longitudinal axis (11') of the passage opening (11).

11. The fixture in accordance with one of the aforementioned claims,
**characterised in that**,
the control path or control surface (21) of the driving ring (15) has a contour facing into the inside of the driving ring (15) and that the contour of the control cam or control surface 0.21 Din. Bowles and is configured as linear in the area of the inner wall (16) of the driving ring (15), and that the contact surface (25) of the corresponding locking pin (18) is adapted to the contour of the control cam or control surface (21) and is in active contact with it.

12. The fixture in accordance with one of the aforementioned claims,
**characterised in that**,
a cavity (24) is provided between the outer wall (17) of the driving ring (15) and the side wall of the U-shaped accommodating pocket (19) of the corresponding locking pin (18) which runs adjacent to the outer wall (17), by means of which the rotational movement of the driving ring (15) is released.

13. The fixture in accordance with one of the aforementioned claims,
**characterised in that**,
a bowed or curved formed projection is provided on at least one of the locking pins (18) which is in active contact with the clamping pin (12) and grips around the latter, at least in some areas, and that the formed projection locks the clamping pin (12) in the passage opening (11).

14. The fixture in accordance with one of the aforementioned claims,
**characterised in that**,
two of the locking pins (18) used are located flush opposite one another or that three of the locking pins (18) run at an angle of 120° in relation to one another or that in each multiple of locking pins (18), they are located evenly distributed about the circumference of the locking pin (12).

15. The fixture or clamping housing in accordance with Claim 1 or 12,
**characterised in that**,
the control surface (21, 22, 23) of the driving ring (15) facing away from the longitudinal axis (11') has an outward curvature, and that the contact surface (25) of the locking pin (18) projects into the control surface (21, 22, 23) and that the control surface (21, 22, 23) transfers an advance force from the driving ring (15) onto the corresponding locking pin (18) via the contact surface (25).

## Revendications

1. Dispositif (1) servant à retenir une pièce à usiner (2) sur la table (3) d'une machine-outil (4), comprenant :
- un boîtier de serrage (10) dans lequel il est pratiqué une ouverture de passage (11) comportant un boulon de serrage (12) pour l'appui de la pièce à usiner (2) sur le boîtier (10) du dispositif (1),
- un anneau d'entraînement (15) logé en rotation dans le boîtier (10) et qui est en liaison d'entraînement avec une broche d'entraînement (20) insérée dans le boîtier (10), qui permet d'ajuster l'anneau d'entraînement (15) autour de l'axe longitudinal (11') de l'ouverture de passage (11) sous un angle défini,
- et au moins deux boulons d'arrêt (18) donnant sur l'axe longitudinal (11') de l'ouverture de passage (11), radialement mobiles dans le boîtier (10) et respectivement en liaison d'entraînement avec l'anneau d'entraînement (15) et qui, en état serré, assurent l'arrêt du boulon de serrage (12) dans l'ouverture de passage (11) du boîtier (10) ou le libèrent en état d'origine
**caractérisé en ce que**
sur la face intérieure (16) de l'anneau d'entraînement (15), il est prévu à chaque endroit des boulons d'arrêt (18), une face de commande (21) ou une courbe de commande avec au moins deux inclinaisons différentes (22, 23), que dans le boulon d'arrêt respectif (18), il est pratiqué une poche de réception (19) à section transversale en U, dans laquelle il est inséré l'anneau d'entraînement (15), et que sur la paroi du boulon d'arrêt (18) donnant sur la paroi intérieure (16) de l'anneau d'entraînement (15), il est pratiqué ou prévu une face de portée (25) adhérant à la face de commande (21) ou à la courbe de commande de l'anneau d'entraînement (15) et déplaçant le boulon d'arrêt respectif (18) radialement vers l'intérieur ou l'extérieur en fonction du sens de rotation de l'anneau d'entraînement (15).

2. Dispositif d'après la revendication 1,
**caractérisé en ce que**
grâce à une vis de fixation (14) entrant dans l'ouverture de passage (11), le boîtier (10) est fixé en position définie sur la table (3).

3. Dispositif d'après les revendications 1 ou 2,
**caractérisé en ce que**
dans l'ouverture de passage (11), il est prévu une gorge de guidage (31) à section transversale en U dans laquelle il est inséré et retenu de manière mobile l'anneau d'entraînement (15).

4. Dispositif d'après la revendication 3,
**caractérisé en ce que**
dans le boîtier (10) et dans la paroi (32) de la gorge de guidage (31) donnant sur l'axe longitudinal (11') de l'ouverture de passage (11), il est pratiqué respectivement un perçage de passage (33) en alignement précis l'un sur l'autre et qu'un des boulons d'arrêt (18) est retenu de manière glissante dans les deux perçages de passage (33) opposés du boîtier (10) et de la gorge de guidage (31).

5. Dispositif d'après une des revendications précédentes,
**caractérisé en ce que**
la broche d'entraînement (20) est retenue en rotation dans une poche (34) pratiquée dans le boîtier (10), que sur l'anneau d'entraînement (15), il est formé ou monté un téton (35) s'étendant parallèlement à l'axe longitudinal (11') de l'ouverture de passage (11) et qui est raccordé par entraînement à la broche d'entraînement (20) et qu'à la rotation de la broche d'entraînement (20), l'anneau d'entraînement (15) est mis en rotation sur le téton (35).

6. Dispositif d'après une des revendications précédentes 3 à 5,
**caractérisé en ce que**
les boulons d'arrêt respectifs (18) sont retenus par l'anneau d'entraînement (15) dans la gorge de guidage (31) et que moyennant un couvercle (36), l'anneau d'entraînement (15) s'appuie sur le boîtier (10).

7. Dispositif d'après la revendication 6,
**caractérisé en ce que**
dans le boîtier (10), il est pratiqué un taraudage (37) et, sur le couvercle (36), un filetage extérieur (38) et qu'en vissant le couvercle (36) dans le taraudage (37) du boîtier (10), l'anneau d'entraînement (15) est serré dans la gorge de guidage (31).

8. Dispositif d'après une des revendications précédentes,
**caractérisé en ce que**
chacun des boulons d'arrêt (18) possède une face de serrage inclinée (41), que dans les boulons de serrage (12), il est prévu une gorge de serrage périphérique ou plusieurs gorges de serrage individuelles (42) portant une face de portée (43) inclinée vers l'extérieur et qu'en état serré, la face de serrage respective (41) des boulons d'arrêt (18) porte sur la face de portée (43) du boulon de serrage (12) et, avec la dernière, crée une force de traction retenant le boulon de serrage (12) parallèlement à l'axe longitudinal (11') de l'ouverture de passage (11).

9. Dispositif d'après une des revendications précédentes,
**caractérisé en ce que**
sur la surface (12') du boulon de serrage (12) donnant sur la pièce à usiner (2), il est prévu un nez de centrage annulaire ou polygonal (39) collaborant avec une face de portée (40) pratiquée dans la pièce à usiner (2) en vue de l'alignement de la pièce à usiner (2) avec référence à l'axe longitudinal (11') du boîtier (10).

10. Dispositif d'après une des revendications précédentes,
**caractérisé en ce que**,
entre le boîtier (10) et la table (3), il est prévu une douille de centrage (44) assurant l'alignement de la vis de fixation (13) entre le boîtier (10) et la table (3) sur l'axe longitudinal (11') de l'ouverture de passage (11).

11. Dispositif d'après une des revendications précédentes,
**caractérisé en ce que**
la piste de commande ou la face de commande (21) de l'anneau d'entraînement (15) possède un contour donnant vers l'intérieur de l'anneau d'entraînement (15), que le contour de la piste de commande ou de la face de commande (21) est de 0,21 Din. Bowles, et linéaire au niveau de la paroi intérieure (16) de l'anneau d'entraînement (15) et que la face de portée (25) du boulon d'arrêt respectif (18) est adaptée au contour de la piste de commande ou la face de commande (21) et se trouve en liaison d'actionnement avec celle-ci.

12. Dispositif d'après une des revendications précédentes,
**caractérisé en ce que**,
entre la paroi extérieure (17) de l'anneau d'entraînement (15) et la paroi latérale voisine de la poche de réception sous la forme d'un U (19) du boulon d'arrêt respectif (18), il est prévu un espace libre (24) permettant la rotation de l'anneau d'entraînement (15).

13. Dispositif d'après une des revendications précédentes,
**caractérisé en ce que**
sur au moins un des boulons d'arrêt (18), il est prévu une saillie courbée entrant un liaison d'actionnement avec le boulon de serrage (12) et l'entoure du moins partiellement, et que la saillie retient le boulon de serrage (12) dans l'ouverture de passage (11).

14. Dispositif d'après une des revendications précédentes,
**caractérisé en ce que**
deux des boulons d'arrêt (18) s'opposent en alignement précis ou que trois des boulons d'arrêt (18) sont arrangés sous un angle de 120° l'un par rapport à l'autre ou que chaque multitude de boulons d'arrêt (18) est uniformément distribuée sur le pourtour du boulon de serrage (12).

15. Dispositif d'après les revendications 1 ou 12,
**caractérisé en ce que**
référée à l'axe longitudinal (11'), la face de commande (21, 22, 23) de l'anneau d'entraînement (15) est coudée vers l'extérieur, que la face de portée (25) du boulon d'arrêt (18) s'immerge dans la face de commande (21, 22, 23) et que la face de commande (21, 22, 23) assure par l'intermédiaire de la face de portée (25) une force d'avance de l'anneau d'entraînement (15) vers le boulon d'arrêt respectif (18).
